# EUROPEAN PATENT APPLICATION

(11) **EP 4 841 584 A1**
(43) Date of publication of application: **18.11.2026**
(21) Application number: 25177148.1
(22) Date of filing: 17.05.2025
(51) Int. Cl.: G06V 10/82, G06V 20/64

(54) **SYSTEM AND METHOD FOR PREDICTING A MAXIMUM SAMPLE WIDTH OF A TO-BE-MEASURED SAMPLE**

(71) Applicant: Bruker AXS SE, 76187 Karlsruhe (DE)
(72) Inventor: Short, Markus, Karlsruhe (DE)
(74) Representative: Fleuchaus & Gallo Partnerschaft mbB

(57) **Abstract**

Computer-implemented method, computer program product and computing system (100) are provided for training an artificial neural network (120) to predict a maximum sample width of a particular sample (200s1) placed in a sample provisioning appliance (200p1). A plurality of training images (210ti*) is received. Each training image (210ti1) shows a training sample (200ts1, 200ts2) placed in a corresponding sample provisioning appliance (200p1, 200p2) with a known maximum sample width (ss1). A line scan module (110) obtains a plurality of radial line scans (Is1 to Ism) of the training image (201ti1) with the sample provisioning appliance (200p1) and the respective training sample (200ts1). Each line scan provides a brightness profile (b1 to bm) of the training image (210ti1) along the respective line scan. The brightness profiles (b1 to bm) are concatenated into a single brightness vector (BV). The neural network uses the brightness vector (BV) as training input wherein the number of neurons of the input layer (120-i) equals the number of brightness values in the brightness vector. The known maximum sample width (ss1) serves as ground truth for the output layer (120-o) when training weights (V, W) and biases of the neural network by using gradient descent to minimize the output of a loss function used for determining said loss.

## Description

### Technical Field

The present invention generally relates to an indirect measurement approach for estimating a spatial width of a physical object, and in particular relates to predicting the maximum sample width of a sample used for a physical measurement.

### Background

Certain types of wavelength dispersive X-Ray fluorescence (WDXRF) spectrometers utilize a robotic sample handler to automate sequentially placing a series of samples into a measurement chamber for sample analysis. Such measurements can take minutes to hours to days to complete. Therefore, allowing preplacement of a series of samples for automatically performing a series of measurements on multiple samples without the need for human interaction is convenient in that it allows running such measurements during times (e.g., overnight) when the operation of the spectrometer by a human operator is not possible. For performing the measurements, each sample has to be placed in an appropriate sample holder to facilitate a consistent measurement by ensuring proper positioning and to prevent the sample from being misplaced and lost in the measurement chamber. Different sample holders have different aperture sizes for exposing the sample to the X-ray radiation of the spectrometer. A sample needs to be placed in a respective sample holder which matches the sample size (the width of said sample) so that the fluorescence signal from the sample is maximized while the sample is secured. In other words, a variety of sample holders is available with different sizes and apertures for correspondingly sized samples. Placing each sample into a sample holder with the best fit for proper sample positioning and maximum signal intensity in an automated process requires measuring the sample size of loose samples which then allows the selection of a corresponding matching sample holder as well as the automated placement of the sample in the selected sample holder.

### Summary

There is therefore a need for a method and system that allow efficient automated measurement of the maximum sample width of preplaced samples which is a relevant sample parameter for the subsequent selection of a corresponding matching sample holder to ensure proper sample positioning and maximum signal intensity for later spectrometric measurements of said samples. This technical problem is solved by the features of the independent claims. Thereby, in a first aspect, the claims relate to the training of an artificial neural network which, after training, is able to predict the maximum sample width of a to-be-measured sample. In a second aspect, the claims relate to the trained artificial neural network itself. In a third aspect, the claims relate to the application of the trained neural network to image data obtained from a to-be-measured sample in its preplacement location to predict the maximum sample width of said sample.

In one embodiment, a computer-implemented method is provided for training an artificial neural network to predict a maximum sample width of a particular sample placed in a sample provisioning appliance. Thereby, the sample provisioning appliance is part of a sample placement area which provides a plurality of alike sample provisioning appliances for placing a variety of different to-be-measured samples. The sample provisioning appliance has a plurality of differently sized sample interface areas. Each sample interface area is adapted for the receipt of a sample with a maximum sample width that fits into a respective sample interface area. In other words, each sample interface area corresponds to a section of the sample provisioning appliance which is sized and shaped such that it can ensure proper sample positioning of samples with a maximum sample width in the range between the matching sample interface area and the next smaller sample interface area. For example, the various sample interface areas of a sample provisioning appliance may have boundaries which prevent that a matching sample can slide over such boundaries into the next larger sample interface area. Typically, a holder interface area of the sample provisioning appliance adjoins the sample interface area for samples with the largest maximum sample width and is used for placing to-be-selected sample holders also in the sample placement area. Thereby, the external dimensions of different sample holders are alike. However, a sample with a maximum sample width corresponding to the size of the holder interface area would not fit into any sample holder.

The artificial neural network has an input layer, an output layer, and at least one hidden layer. The output layer has one or more neurons representing the predicted maximum sample width of the particular sample.

It is to be noted that examples of prior art object detection models including You Only Look Once (YOLO), Region-based Convolutional Neural Networks (R-CNN), and Single Shot Detector (SSD) find use in applications such as autonomous vehicles, video surveillance, industrial robotics, and medical imaging. In a prior art solution, for selecting a corresponding sample holder, a prior art object detection model using the MobileNet architecture was used to identify numerous different sample holder types and configurations as well as their locations in an image captured by a respective camera. However, this model could not properly identify the maximum sample widths of loose samples. That is, prior art object detection models were not able to automate the entire process from sample size prediction of loose samples to performing the final sample measurements because the automatic selection of the appropriate sample holder requires an automated identification of a corresponding sample size category based on the maximum sample width of the sample. With prior art object detection models, sample holders could be categorized with 100% accuracy, including identifying if they are empty, contain a solid sample or a container for storing a liquid sample. However, categorizing loose samples according to their sample width had a failure rate of about 10%.

Further, the MobileNet architecture-based model takes every pixel of an input image as its input vector. That is, the number of neurons of the input layer corresponds to the number of pixels of the entire image. This adds much unnecessary information and leads the model to associate each sample type in a set of to-be-measured samples with its own size category. That is, such a model fails to learn the maximum sample width for any sample type based on how the sample appears in the image. To solve this problem, instead of feeding all pixel values of the image into a neural network, a series of radial line scans is used as described in the following.

The herein disclosed neural network topology in combination with the herein disclosed training method leads to a model which can predict the maximum sample width (the associated sample size category) with 100% accuracy as demonstrated in the detailed description. The herein disclosed artificial neural network is not a classic object detection model but rather uses radial line scans to analyze an image of a to-be-measured sample in a sample provisioning appliance. The artificial neural network is used by a computer system executing the following steps.

The computer system has a data interface adapted to receive a plurality of training images. The training images may be arranged in one training batch, or they may be arranged in multiple training batches. Each training image shows a training sample placed in a corresponding sample provisioning appliance. The training images are captured by a camera which is placed such that it can obtain images of the training samples while being placed in corresponding provisioning appliances. In one embodiment, the camera can be an infrared (IR) camera. The provisioning appliances in all training images have the same size and structure with regard to the sample interface areas. For each training image, the maximum sample width of the respective training sample is known. For example, the training image of a particular sample may be annotated with the corresponding maximum sample width. In each training image, the respective training sample covers at least a portion of a corresponding sample interface area of the sample provisioning appliance in which the training sample is placed. That is, the training sample, in the direction of its maximum sample width, does not exceed the boundary of the corresponding sample interface to the next larger sample interface area. The plurality of training images includes training images with known maximum sample widths for all differently sized sample interface areas of the sample provisioning appliances. Advantageously, the training samples can have a point-symmetric cross-section in parallel to a sample interface area matching the maximum sample width of the particular sample. For example, training samples may have a cylindric shape with a circular cross section. But also, elliptic or rectangular cross sections of training samples allow for appropriate training of the neural network.

Optionally, the number of training images can be enhanced by using data augmentation methods. For example, an additional training image may be generated by varying the center point of the radial line scans of an already existing training image and saving the modified image as an additional training image. Further, an additional training image may be generated by varying the brightness of an already existing training image and saving the modified image as an additional training image.

The training images of a particular training batch are processed by a training module in a training step to train the neural network. The training module can perform multiple training batches until a predefined training criterion has been reached. The training criterion is reached when a predefined prediction accuracy of the neural network has been reached with the current training batch, and/or when the reduction in the average loss from a preceding training batch to the current training batch has fallen below a predefined threshold.

At least for the training images of a current training batch, a line scan module obtains a plurality of radial line scans of each of these training images with pixel representations of the sample provisioning appliance and the respective training sample. Each line scan extends at least from the outermost sample interface area to the innermost sample interface area. The center point of the radial line scans is associated with the center of the respective sample provisioning appliance. That is, the center point of the radial line scans may be the same as the center of the sample provisioning appliance, or it may be in close vicinity of the sample provisioning appliance center (i.e., within a circle with a predefined radius around this center). The latter occurs if later described data augmentation methods are used for generating additional training images by varying the center point of the radial line scans. Advantageously, the angle step sizes between two neighboring line scans are equal for all line scans. Advantageously, the angle step size is below 20 degrees, and preferably equal to or below 10 degrees. Each line scan provides a brightness profile of the training image along the respective line scan. In other words, a line scan defines a sequence of pixels in the training image along a straight line which is directed towards the center pixel of the representation of the provisioning appliance. A line scan may also have a certain line width which extends over more than just a single pixel. Advantageously, the training images are black and white images where each greyscale value of the resulting brightness profile represents a brightness value for a corresponding pixel. In case of a line width of more than one pixel, all pixel brightness values of the rectangular area defined by a line scan represent the brightness profile of this line scan. The line scan module then concatenates, in a predefined order, the brightness profiles of the plurality of radial line scans into a single brightness vector. Advantageously, the predefined order orders the line scans clockwise or anti-clockwise. However, other orders can also be used as long as they are identical for all training images.

The line scan module then provides the single brightness vectors of the current training batch as training input to the input layer of the artificial neural network. The number of neurons of the input layer equals the number of brightness values in the brightness vectors. The training module uses the known maximum sample widths of the training samples as ground truth for the output layer when training weights and biases of the neural network by using gradient descent to minimize an averaged output of the used loss function

The herein disclosed artificial neural network topology in combination with the herein disclosed training method significantly shortens the processing time for training and applying the neural network and substantially reduces the number of training images required to achieve a 100% prediction accuracy for the validation set, while at the same time, aiding the training process by focusing on the most relevant data from the image and avoiding irrelevant artifacts. It is to be noted that 100% prediction accuracy was achieved with the validation set that was used in the experimental set up which is disclosed in in detail in the detailed description. That is, 100% prediction accuracy with every possible sample in every possible lighting situation cannot be guaranteed. However, a very high degree of accuracy is always reached for an appropriate angle step size between the various line scans as disclosed in the detailed description. A person skilled in the art can easily determine (via respective testing experiments) the appropriate angle step size for a particular experimental spectrometer setup.

In one embodiment, the neural network is implemented as a classification neural network and the output layer comprises a number of neurons corresponding to the number of sample interface areas. Each neuron of the output layer represents a different maximum sample width associated with a sample size category corresponding to the size of one of the sample interface areas. In this embodiment, training the weights and biases of the classification neural network is based on a classification activation function for the output layer and a classification loss function. Examples of classification activation functions include, but are not limited to: sigmoid, softmax, hard sigmoid, swish, and mish. Examples of classification loss functions include, but are not limited to: Categorical Cross-Entropy loss, Sparse Categorical Cross-Entropy, Kullback Leibler Divergence, Binary Cross-Entropy, or Poisson Function.

In one embodiment, the neural network is implemented as a regression neural network and the output layer has a single neuron providing the predicted maximum sample width as a size value corresponding to the size category of the sample interface area covered at least partially by the particular sample. In this embodiment, training the weights and biases of the regression neural network is based on a regression activation function and a regression loss function. Examples of regression activation functions include, but are not limited to: Rectified Linear Unit (ReLU), linear, and tanh. Sigmoid can be used in regression applications, but this is uncommon. Examples of regression loss functions include, but are not limited to: Mean Squared Error, Mean Squared Logarithmic Error, Mean Absolute Error, Mean Absolute Percentage Error, Huber Loss, of Log-Cosh Loss.

Dependent on the position of the camera which is used for obtaining training images from training samples placed in provisioning appliances, the camera may not be situated directly above the center of a respective sample provisioning appliance but capture the image under a defined viewing angle. In other words, the optical axis of the camera is not orthogonal to a respective sample provisioning appliance. As a result of this viewing angle of the camera, the training images are distorted. In this case, the computer system may further comprise a correction module adapted to apply a line scan correction for compensating said image distortion resulting from said viewing angle. The correction module can apply a line scan correction by using a scaling factor for the radial line scans stretching start and end points of each line scan along an axis orthogonal to the squeezed axis of the distorted training images. In other words, the correction module applies an elliptic transformation to the radial line scans which compensates for the image distortion resulting from said viewing angle.

The above disclosed method and system for training an artificial neural network finally provide a trained artificial neural network that is adapted to predict a maximum sample width of a particular sample placed in a sample provisioning appliance. The use of this trained neural network in the herein disclosed methods and systems allows the placement of loose to-be-measured samples in a preplacement device having a plurality of alike provisioning appliances. A preplacement of each sample within an appropriately sized sample holder is not necessary because the loose samples can now be automatically categorized according to their size and a robot can use this information to place each sample in an appropriately sized sample holder for an upcoming measurement. In other words, the herein disclosed trained artificial neural network enables a fully autonomous measurement process of these samples without any human interaction.

In one embodiment, a further computer-implemented method is provided for predicting a maximum sample width using said trained artificial neural network. A sample width prediction computer system including the previously described line scan module as well as the trained artificial neural network (or the same computer system which was used for training the neural network) can be used to perform this further computer-implemented method. In this embodiment, the computer system receives, via an appropriate data interface, an input image showing a particular sample provisioning appliance and a respective to-be-measured sample covering at least a portion of one particular sample interface area of the particular sample provisioning appliance. That is, instead of the training images in the training embodiment, the data interface now receives an image of a to-be-measured sample placed in one of the provisioning appliances. As a consequence, technically spoken, the data interface corresponds to the data interface used for the training method. Optionally, the same correction method used by the training method for compensating distortions in training images caused by the viewing angle of the image capturing camera, can also be applied to a received test input image before obtaining the line scans.

A plurality of radial line scans of the input image is then obtained using the same approach as for obtaining the line scans in training images. That is, each line scan extends at least from an outermost sample interface area to an innermost sample interface area in the direction of the center of the sample provisioning appliance (or vice versa). Each line scan may extend to also cover a holder interface area which may adjoin the outermost sample interface area. Thereby, each line scan provides a brightness profile of the input image along the respective line scan. The line scan module then concatenates the brightness profiles of the plurality of radial line scans into a single brightness vector. It is to be noted that a particular line scan of the plurality of radial line scans may extend to the center of the data provisioning appliance in which case the radial line scan to the opposite end of the sample provisioning appliance seamlessly connects to the particular line scan at the center point. Advantageously, the inner ends of the radial line scans end already before the center point, thereby defining an exclusion area comprising pixels which are not considered for the brightness profiles. In case of line scans extending to the center point, pixels of a predefined exclusion area may be disregarded when creating the concatenated brightness profile.

The brightness vector is then provided as test input to the input layer of the neural network. Thereby, the number of neurons of the input layer equals the number of brightness values in the brightness vector. The neural network then obtains a prediction of the maximum sample width of the particular (to-be-measured) sample from the output layer of the neural network. Depending on the neural network implementation, the maximum sample width is provided as a classification value associated with a corresponding output neuron of a classification neural network, or it is provided by a single output neuron of a regression neural network (providing the maximum sample width as a regression result).

In one embodiment, the sample width prediction computer system includes an optional robot instruction composer module adapted to compose, based on the predicted maximum sample width, a control instruction for a sample holder selection robot. The control instruction is adapted to instruct said robot to automatically select, from a plurality of differently sized sample holders, a particular sample holder associated with the predicted maximum sample width. The sample holders may be already tagged with size categories which correspond to respective maximum sample widths or the respective sample holders may be placed in predefined positions.

The control instruction for the sample holder selection robot also includes instructions for the robot to place the respective sample in the selected particular sample holder. A person skilled in the art of robot control knows how to instruct such robots to perform the respective tasks. Once the to-be-measured sample has been placed in the appropriate sample holder, either the sample holder selection robot or a further robot, which is part of the spectrometer, finally provides the selected sample holder with the sample to the measurement chamber of the spectrometer so that the intended physical measurement can be performed for the respective sample by the spectrometer. Typically, a computer for executing a corresponding instrument control software (e.g., to control the sample holder movements and/or respective object recognition software) is part of the spectrometer. The control instructions for such movements are typically not part of the control instruction provided by the sample width prediction computer system to the sample holder selection robot. For the communication with the sample holder selection robot, the sample width prediction computer system has an appropriate data interface which enables a corresponding machine-to-machine communication.

In one embodiment, a computer program product is provided for training an artificial neural network to predict a maximum sample width of a particular sample placed in a sample provisioning appliance. The computer program product has computer readable instructions that, when loaded into a memory of a computing device and processed by one or more processors of the computing device, cause the computing device to perform the steps of the computer-implemented training method as disclosed herein.

In one embodiment, a further computer program product is provided for predicting a maximum sample width of a particular sample placed in a sample provisioning appliance. This further computer program product has computer readable instructions that, when loaded into a memory of a computing device and processed by one or more processors of the computing device, cause the computing device to perform the steps of the computer-implemented method for predicting a maximum sample width as disclosed herein.

Further aspects of the invention will be realized and attained by means of the elements and combinations particularly depicted in the appended claims. It is to be understood that both the foregoing general description and the following detailed description are exemplary and explanatory only and are not restrictive of the invention as described.

### Brief description of the figures

FIG. 1A is a block diagram showing an embodiment of a computer system for training an artificial neural network according to an embodiment to predict a maximum sample width of a particular sample placed in a sample provisioning appliance;
FIG. 1B is a block diagram showing an embodiment a computer system for predicting a maximum sample width of a particular sample placed in a sample provisioning appliance according to an embodiment;
FIG. 1C illustrates a viewing angle of a camera device in relation to a particular sample;
FIG. 2A is a flow-chart of an embodiment of a computer-implemented method for training an artificial neural network to predict a maximum sample width of a particular sample placed in a sample provisioning appliance;
FIG. 2B is a flow-chart of an embodiment of a computer-implemented method for predicting a maximum sample width of a particular sample placed in a sample provisioning appliance;
FIGs. 3A, 3B are photos of an exemplary sample handling area for the preplacement of to-be-measured samples;
FIGs. 3C, 3D show black and white images with empty sample provisioning appliances and with samples placed in sample provisioning appliances, taken by an IR camera built into a sample handler (sample holder selection robot) of a spectrometer system;
FIG. 3E illustrates an example of three differently sized samples with corresponding sample holders;
FIGs. 4A, 4B illustrate line scans of an empty sample provisioning appliance;
FIGs. 5A, 5B illustrate line scans of a sample provisioning appliance with a sample;
FIGs. 6A, 6B show curves representing the development of prediction accuracy and loss during the training of the artificial neural network; and
FIG. 7 is a diagram showing an example of a generic computer device and a generic mobile computer device, which may be used with the techniques described herein.

### Detailed description

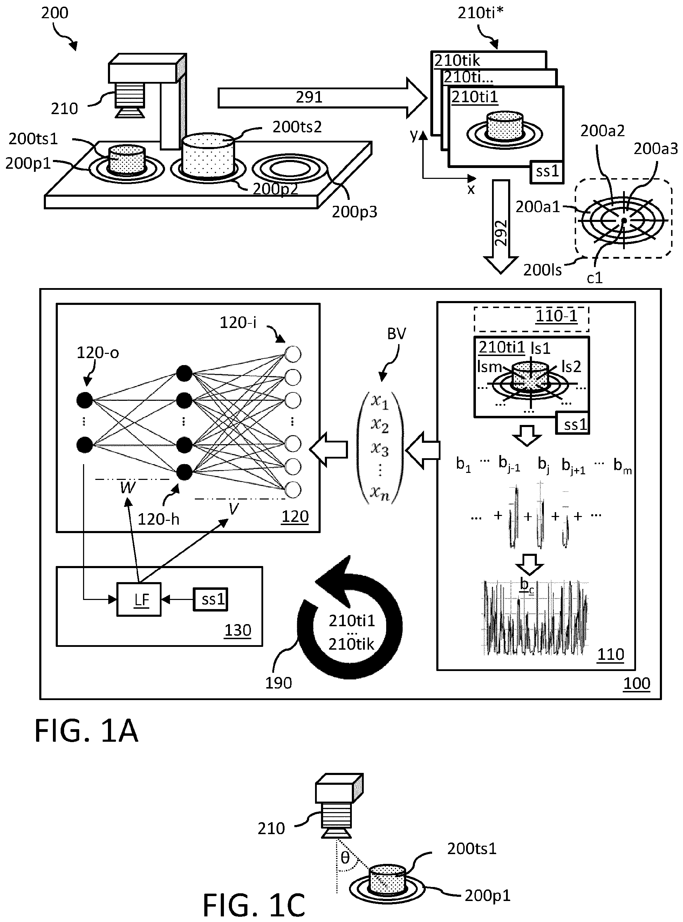

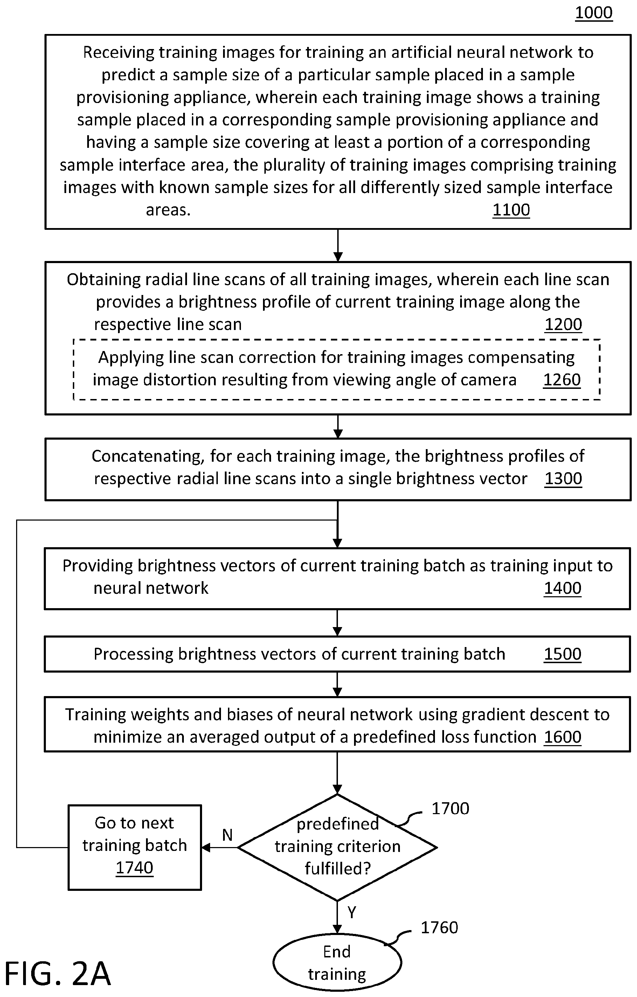

FIG. 1A is a block diagram showing an embodiment of a computer system 100 for training an artificial neural network 120 to predict a maximum sample width of a particular sample placed in a sample provisioning appliance. System 100 can execute the computer-implemented method 1000 illustrated by the flowchart of FIG. 2A. In the following the system 100 of FIG. 1A will be described in view of the flowchart of FIG. 2A. System 100 is communicatively coupled (via an appropriate data interface) with a data source providing 292 training images 210ti*. For example, the data source can be a data storage location which stores 291 training images 210ti1 to 210tik obtained by a camera device 210 which is part of a sample placement area 200. Advantageously, the training images are black and white images obtained by a black and white or IR camera device. It can be advantageous to use an IR camera and IR LED flash to minimize the effects of different lighting situations of the samples placed in the sample provisioning areas, resulting in a more consistent result. Each training image shows a representation of a training sample 200ts1, 200ts2 which is placed in a respective sample provisioning appliance 200p1, 200p2, 200p3 in the sample placement area 200. In the example embodiment shown in FIG. 1A, each sample provisioning appliance has a plurality of sample interface areas 200a1, 200a2, 200a3.

For example, each sample interface area can be formed by a milled ring such that loose samples of different maximum sample widths can slide into the milled ring with the respective size. For example, training sample 200ts1 has a maximum sample width which fits into the inner milled ring (sample interface area 200a3) of sample provisioning appliance 200p1, whereas training sample 200ts2 has a maximum sample width which fits into the middle milled ring (sample interface area 200a2) of sample provisioning appliance 200p2. In general, each sample interface area has an upper and a lower boundary which defines a range of maximum sample widths of samples that can be placed in the sample provisioning appliance such that the respective sample covers at least a portion of said sample interface area. Thereby, in the example with ring shaped sample interface areas, the radius of a particular sample interface area defines the maximum sample width of a sample which fits in the particular sample interface area. A person skilled in the art can also use other shapes for sample interface areas (e.g., squares, ellipses, etc.). In other words, each sample interface area defines a sample size category for samples with maximum sample widths that fit the sample size category. Each training image is annotated with the sample size category (e.g., ss1) of the sample provisioning appliance (e.g., 200p1) which matches the maximum sample size of the training sample (e.g., 200ts1). In the example of FIG. 1A, the sample size category ss1 provides a rough measurement of the maximum sample size of the training sample 200ts1 which is sufficiently accurate for associating the sample 200ts1 with a matching sample holder.

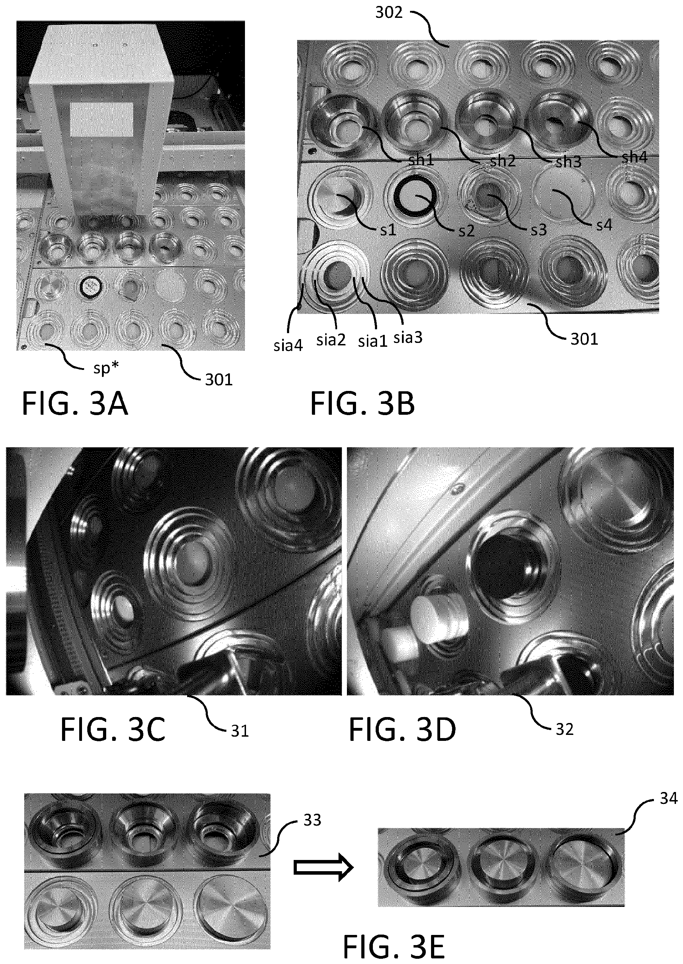

In the example of FIG. 1A, the training samples have a cylindric shape. FIGs. 3A and 3B show an example of a real sample placement area 301 with ring shaped sample provisioning appliances. Each sample provisioning appliance sp* has four ring shaped sample interface areas sia1 to sia4 as shown in FIG. 3B. Samples s1, s2, and s4 have cylindric shapes whereas sample s3 has a rectangular (cubic) shape. Sample s1 fits into sia1 and therefore is to be measured with a maximum sample width corresponding to two times the radius of the outer boundary of sia1. Sample s2 fits into sia2 and therefore is to be measured with a maximum sample width corresponding to two times the radius of the outer boundary of sia2. In the case of sample s3, the maximum sample width is determined by the diagonals of the rectangular cross-section of s3. The corners of s3 cover at least a portion of sia3. That is, sample s3 fits into sia3 and, therefore, is to be measured with a maximum sample width corresponding to two times the radius of the outer boundary of sia3. Finally, sample s4 fits into sia4 and therefore is to be measured with a maximum sample width corresponding to two times the radius of the outer boundary of sia4. If s1 to s4 are used as training samples, the outer boundaries of the respective sample interface areas define the maximum sample width as ground truth annotation of the corresponding training image. The upper part of FIG. 3B shows four sample holders sh1 to sh4 for different maximum sample widths. Each sample holder has a sample interface area with a centered aperture tailored to the respective maximum sample width. FIG. 3E illustrates and example of three differently sized cylindric samples (32 mm (left), 40 mm (middle) and 52 mm (right) samples) in the lower half of image 33 with three corresponding sample holders in the upper half of image 33. The sample holder to the left has a 28 mm aperture, the sample holders in the middle and to the right have 34 mm apertures, wherein the interior of the sample holder in the middle is funnel-shaped for automatically centering the 40 mm sample. Image 34 illustrates the three sample holders of image 33 after the samples have been placed in the respective sample holder. There are further sample holder types available with smaller apertures including 8 mm, 18 mm and 23 mm for respective samples. In FIG. 3E, it can be seen that the outer ring of each sample provisioning appliance is adapted to receive a sample holder. In other words, the outer ring corresponds to a holder interface area, whereas the inner rings correspond to sample interface areas for samples with different maximum sample widths.

Returning now to FIG. 1A, the training images 210ti* including the maximum sample width annotations indicating the size category of the sample on each respective training image are received 1100 by the line scan module 110 of system 100. The plurality of training images 210ti* includes training images with known maximum sample widths for all differently sized sample interface areas. The training images are arranged in one or more training batches. That is, there is always a current training batch with training images that are used for training the neural network. A person skilled in the art knows that a well-balanced training dataset ensures high prediction accuracy of the neural network 120 after training. Further down below, experimental data are given which were used for training that resulted in a 100% prediction accuracy for the validation dataset.

The line scan module 110 together with the neural network 120 and accuracy check module 130 form part of the computer system's training module 190. The training module 190 processes training images 210ti1 to 210tik of the current training batch. The training can stop when, at the end of the current training batch, a predefined prediction accuracy of the neural network is reached with the current training batch, and/or when the reduction in a determined training loss from training step to training step (form the preceding training batch to the current training step) falls below a predefined threshold. In the example, the last training image of the current training batch is image 200tik. However, the skilled person knows that the number of training images can vary depending on the quality of the training dataset.

The line scan module 110 obtains 1200 a plurality of radial line scans Is1 to Ism of the training images. In the example, the training image is the image 201ti1 which includes the representations of the sample provisioning appliance 200p1 and the respective training sample 200ts1. Dashed frame 200ls illustrates the definition of the line scans. Each line scan extends at least from the outermost sample interface area 200a1 to the innermost sample interface area 200a3 in the direction of the center c1 of the sample provisioning appliance. Each line scan provides a brightness profile b1 to bm of the training image 210ti1 along the respective line scan. Brightness profiles can be easily extracted from black and white images (e.g., IR images), but this is not a necessary requirement. A person skilled in the art can also extract brightness profiles along the line scans from color images.

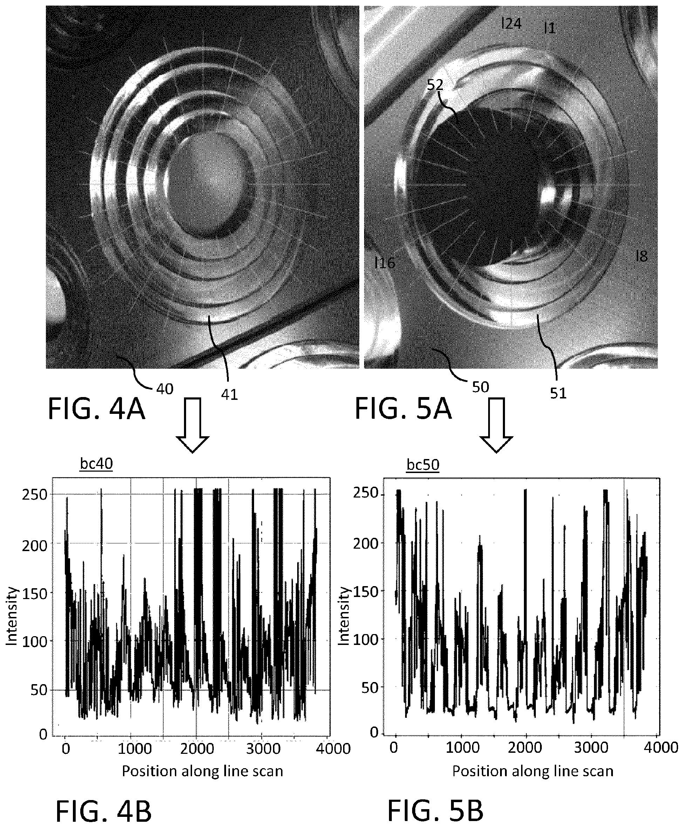

FIGs. 4A and 5A show graphical representations of line scans used for real images 40, 50 obtained from a particular in experimental set up. Both images show sample provisioning appliances 41, 51 by the perspective of a built-in camera, showing the milled rings that the loose samples of different sizes can slide into. Of course, the sample interface areas do not need to be generated by milling. Other manufacturing methods, such as deep drawing or punch drawing, may be used by a person skilled in the art. The camera used in the example is a Firefly FFY-U3-16S2M-S-DL (from Teledyne Technologies Incorporated, Thousand Oaks, CA, USA). The image 40 in FIG. 4A shows an example of an empty sample provisioning appliance 41, while image 50 in FIG. 5A is an example of a 32 mm sample 52 placed in a sample provisioning appliance 51. The inner three sample interface areas in the example correspond to maximum sample widths of 52 mm, 40 mm, 32 mm. The outer ring in the example is a holder interface area for the receipt of a sample holder. That is, a sample which would match the outer ring would not fit into a sample holder. The aim of the training process is to teach the neural network 120 to recognize how many sample interface areas are covered, and how many are visible, to properly categorize the loose samples into discrete maximum sample width categories. For this purpose, the line scan module of the example implementation obtains 24 line scans (the same for both images) illustrated by the grey lines l1 to l24. In an advantageous embodiment, 72 line scans were used.

For each training image, the line scan module then concatenates 1300, in a predefined order, the obtained brightness profiles b1 to bm of the plurality of radial line scans into a single brightness vector illustrated by the concatenated brightness profile b_{c} of the respective training image (cf. FIG. 1A). The results of the concatenated brightness profiles bc40, bc50 for the line scans of FIGs. 4A, 5A are shown in FIGs. 4B, 5B, respectively. In FIG. 4B (for the empty sample provisioning appliance), some of the single line scans show significantly higher brightness values than the corresponding single line scans in FIG. 5B. This results from the dark color of the sample where pixels of line scans associated with parts of the black sample result in relatively low brightness values. Using images like image 50 with a selection of different samples and maximum sample widths for training the neural network enables the network to predict maximum sample widths of unknown samples. Turning back to FIG. 1A, the brightness values x₁ to xₙ of the concatenated brightness profiles b_{c} of the current training batch are then provided 1400 as training inputs for the current training step to the neural network 120 in the format of brightness vectors BV.

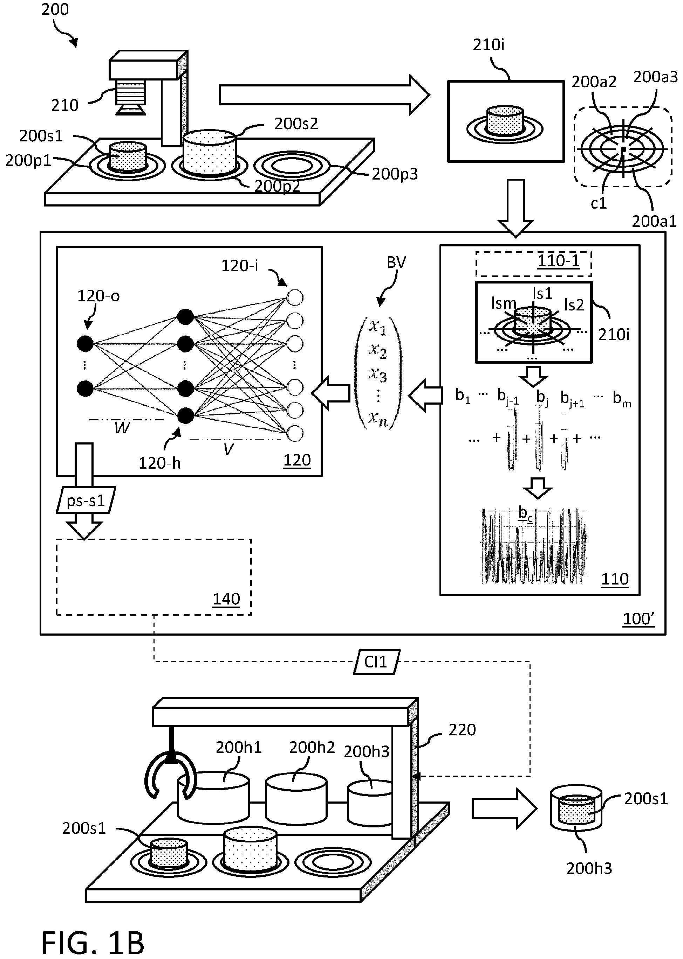

In an optional embodiment, system 100 further has a correction module 110-1 which can be used as a kind of image pre-processing function before determining the brightness profiles b₁ to bₘ using the line scans. Correction module 110-1 may be implemented as a sub-module of the line scan module 100. The correction module can apply 1260 a correction to distorted training images for compensating image distortion in cases where the camera is not situated directly above the center of a respective sample provisioning appliance. FIG. 1C illustrates such a situation where the camera 210 is mounted such that the sample 200ts1 place in sample provisioning appliance 200p1 is not directly placed under the camera 210. Rather, sample and sample provisioning appliance are seen by camera 210 under a viewing angle θ when capturing the training images. This leads to a distortion of the captured images in that the training images are squeezed in one direction. In the example of FIG. 1, the training images 210ti* are squeezed in the x-direction of the x-y-coordinate system of the images. As a result, the rings of the data provisioning appliances appear as ellipses in the training images. Optional correction module 110-1 can use a scaling factor for the radial line scans stretching start and end points of each line scan along an axis y orthogonal to the squeezed axis x of the distorted training images 210ti*.

FIGs. 3C and 3D show images 31, 32 of a plurality of sample provisioning appliances (empty in FIG. 3C and loaded with different samples in FIG. 3D) clearly showing the distortion effect resulting from the viewing angle of the built-in camera. Also, FIGs. 4A and 5A illustrate the elliptic distortion of the sample interface areas of ring-shaped sample provisioning appliances 41, 51. In this example, the horizontal x-axis of the image is squeezed compared to the vertical y-axis of each image. The length of the line scans can then be corrected by using a vertical scaling factor for the line scans, stretching the start and end points of the line scans along the y-axis to match the elliptical pattern of the distorted sample interface areas. After correction, the length of line scans in the horizontal direction is shorter than the length of line scans in the vertical direction providing a comparable coverage of the elliptic sample interface areas by the corrected line scans l1 to l24. It is to be noted that in the above example, radial scans encompassed an elliptical region with a central exclusion zone. A skilled person can adjust the correction to different boundary geometries including circular or rectangular regions, along with different exclusion zones or no exclusion zone at all. Thereby, a central exclusion zone can be used to reduce the amount of data which originate either from the central hole in a sample provisioning appliance or from the middle part of the sample placed in the sample provisioning appliance. Data associated with such a central exclusion zone provide no meaningful information for determining the maximum sample width. Therefore, not including pixel brightness values originating from pixels in the exclusion zone allow: to reduce the size of the neural network model 120, to make model more efficient, and to force the model to concentrate on the most relevant data when training the model.

Each brightness vector BV matches the input layer 120-l of the neural network (i.e., the number of neurons of the input layer equals the number of brightness values in the brightness vector) and serves as training input for the current training batch. The input layer 120-l is connected with at least one hidden layer 120-h which is then connected to the output layer 120-o. The neural network 120 then processes 1500 all brightness vectors of the current training batch. The known maximum sample widths ss1 associated with the respective training samples 210ti1 (i.e., the annotation of image 210ti1) serve as ground truth for the output layer 120-o. When training 1600 weights V, W and biases of the neural network 120, gradient descent is used to minimize an average output of a loss function LF used for determining said loss. The average output corresponds to the average loss of all training images in the current training batch which is determined with predefined loss function LF.

Prediction accuracy module 130 of training module 190 checks 1700, at the end of each training batch, if a predefined training criterion has been fulfilled. The training criterion is not fulfilled (N) if the prediction accuracy of the neural network has not been reached with the current training batch and/or the reduction in the average loss from a preceding (i., the previous) training batch to the current training batch has not fallen below a predefined threshold. If the training criterion is fulfilled (Y), the training can be terminated 1760. If this is not the case (N) the training module continues 1740 with the brightness vectors of the training images of a next training batch by repeating the providing 1400, processing 1500 and training 1600 steps for the next training batch.

In some implementations, the neural network can be a classification network which is implemented as a fully connected neural network or as a convolutional neural network. In a classification neural network, the output layer typically comprises a number of neurons corresponding to the number of sample interface areas (maximum sample width categories). Each neuron of the output layer 120-o represents a different maximum sample width associated with the size of one of the sample interface areas. The example neural network 120 in FIG. 1A (and also in FIG. 1B) is a classification neural network. In such implementations, the loss function LF is a classification loss function. Further, the output layer uses a classification loss function. Examples of classification loss functions and classification activation functions were already given above. Typically, a classification neural network also uses regression activation functions between the input layer and at least one hidden layer(s). A person skilled in the art knows that, when using Sparse Categorical Cross Entropy, there is only one neuron in the output layer with each class being given by a corresponding integer value of the output. Such a model would still be seen as a classification model and not a regression model.

In an example implementation, the neural network 120 was implemented as a dense neural network with an output layer having four neurons corresponding to four different maximum size widths (e.g., 52 mm, 40 mm, 32 mm, and empty) of the respective sample interface areas. It is to be noted that the outer ring of the sample provisioning appliances shown in FIGs. 3*, 4* and 5* is for the receipt (i.e., mounting or holding) of a sample holder and not for the receipt of a sample. The size n of the input vector BV was determined by the length and amount of radial line scans used by the line scan module. In this example, the size of the (first) hidden layer was set to the number of line scans which were used (in the example, 24 line scans were used). The mathematical algorithm of the example neural network architecture can be represented in matrix form as depicted by the following equation 1: $Softmax \left(ReLU\left(\left(\begin{matrix}{x}_{1} \\ ⋮ \\ {x}_{n}\end{matrix}\right)∗\left(\begin{matrix}{w}_{11}^{1} & ⋯ & {w}_{1 n}^{1} \\ ⋮ & ⋱ & ⋮ \\ {w}_{m 1}^{1} & ⋯ & {w}_{mn}^{1}\end{matrix}\right)+\left(\begin{matrix}{b}_{1}^{1} \\ ⋮ \\ {b}_{m}^{1}\end{matrix}\right)\right)∗\left(\begin{matrix}{w}_{11}^{2} & ⋯ & {w}_{1 m}^{2} \\ ⋮ & ⋱ & ⋮ \\ {w}_{41}^{2} & ⋯ & {w}_{4 m}^{2}\end{matrix}\right)+\left(\begin{matrix}{b}_{1}^{2} \\ ⋮ \\ {b}_{4}^{2}\end{matrix}\right)\right)$ (1)

In equation 1, *̅x̅*̅ is the input vector of size *n*, **w¹** and **w²** are the weight matrices of layers 1 and 2, respectively, and *̅b̅*̅¹ and *̅b̅*̅² are the bias vectors of layers 1 and 2, respectively. *m* is the size of the first neural network layer. ReLU refers to a rectified linear unit, which outputs the argument if the argument is positive, and zero if the argument is negative. Softmax is the softmax function, which for the element *i* of a vector *̅z̅*̅ of size *K* is given by $\frac{{e}^{{z}_{i}}}{{\sum }_{j = 1}^{K} {e}^{{z}_{j}}}$. The index of the maximum value of the output vector (the four neurons of the output layer) indicates the maximum sample width associated with the current training image. In the example, the following indices were used: 1 for 52 mm, 2 for 40 mm, 3 for 32 mm and 4 for empty. Thereby, the neural network was forced to recognize the number of visible rings. In the example, one visible ring means that a 52 mm sample is present (only the visible ring for the sample holders is visible and the inner three sample interface areas are all hidden by the sample). Two visible rings mean that a 40 mm sample is present, and so on. If all four rings are visible, then the sample provisioning appliance is empty. If no rings are visible, the sample would be too large to load into any one of the sample holders.

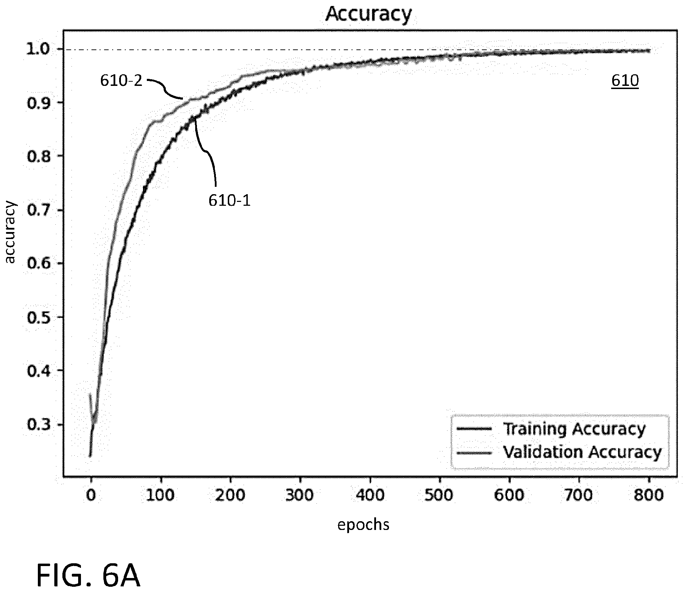

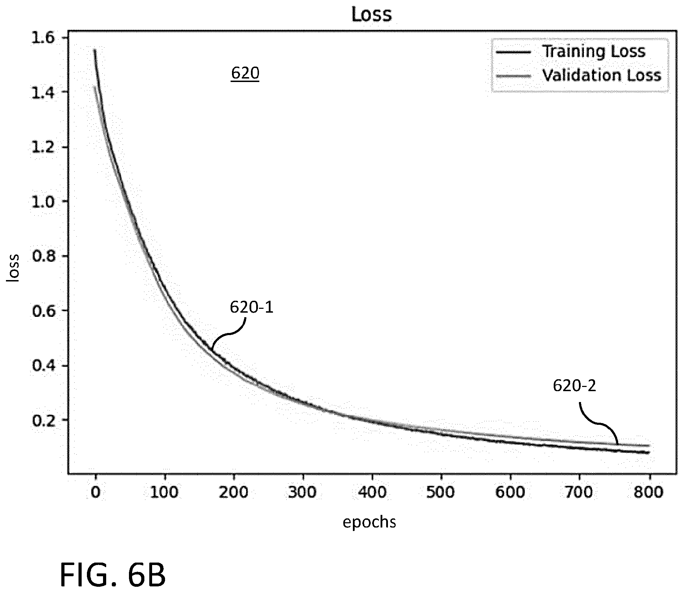

The labelled training images were split into training and validation sets, and the above-described data augmentation methods were applied to both sets (adjusting the center point of the radial line scans and the brightness of the image). An Adam Optimizer was utilized to train the weights and biases based on the categorical cross entropy loss function, and the accuracy of the categorization was additionally used to evaluate the quality of the model (the neural network 120). For the initial 800 epochs, a dropout rate of 40% was used to minimize overfitting. FIG. 6A shows the accuracy of the model, and FIG. 6B shows the loss of the model over this period. The training and validation sets show very good agreement in both rubrics, and both reached an accuracy of 100% as shown in chart 610 of FIG. 6A. Curve 610-1 show the training accuracy and curve 610-2 the validation accuracy. The validation accuracy 610-2 demonstrates that the model was successfully trained to interpret the maximum sample width of each sample in the validation data set (i.e., samples not used for the training steps) based on features contained in the respective validation image.

FIG. 6B shows chart 620 illustrating loss reduction over the training period with the 800 epochs. At the end of the training loss curve 620-1, the loss reduction which is achieved between two subsequent training steps falls below a predefined threshold and the training is terminated. The validation loss curve 620-2 for the validation data set shows a similar loss reduction as the training loss 620-1. In the example implementation, the training was terminated when after five training steps the reduction in loss fell below 0.001.

In some implementations, the neural network 120 can be a regression neural network implemented as a fully connected neural network or a convolutional neural network. In this case, the output layer has a single neuron which provides the predicted maximum sample width as a size value corresponding to the size of the sample interface area covered at least partially by the sample of the respective training image. In these implementations, the loss function LF is a regression activation function and also the output layer uses a respective regression activation function. Examples of regression loss functions and regression activations functions were already given above.

In one embodiment, the number of training images may be enhanced by using data augmentation methods to generate additional training images on the basis of already existing training images. The idea behind such data augmentation is to bring more variety to the training images thus making the trained neural network more robust against variations which may occur later in test images with to-be-measured samples. For example, additional training images may be generated by varying the center points of the radial line scans of already existing training images. A further data augmentation method may vary the brightness of already existing training images and save the modified training images as additional training images. A still further data augmentation method may blur existing training images and save the modified training images as additional training images.

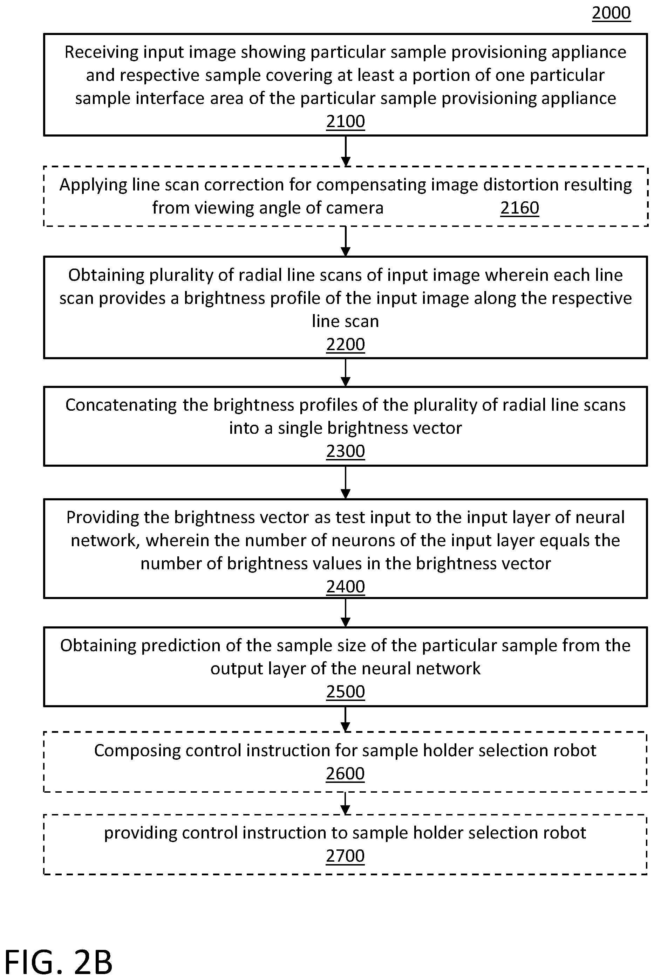

In one embodiment, the artificial neural network 120 which has been trained in accordance with the computer-implemented method 1000 can then be used by a sample width prediction computer system 100', as illustrated by FIG. 1B, for predicting a maximum sample width of a particular sample placed in a sample provisioning appliance. The sample width prediction computer system 100' can be the same system as the training computer system 100 once the neural network 120 has been trained. However, system 100' can also be a different computer system which also has an implementation of the line scan module 110, but where the trained neural network 120 has been obtained from an external source. For example, system 100' may have obtained the trained neural network 120 from an external data source where the trained neural network 120 was stored by the training system 100. FIG. 2B is a flow chart of a computer-implemented sample width prediction method 2000 which can be performed by system 100'. Therefore, system 100' is described in the context of method 2000.

System 100' has a data interface adapted to receive 2100 an input image 210i showing a particular sample provisioning appliance 200p1 loaded with a particular sample 200s1 covering at least a portion of one particular sample interface area 200a3 of the particular sample provisioning appliance. The data interface can be the same interface which is used by training system 100 to receive the training images. Advantageously, the setup of the sample preplacement area 200 with samples 200s1, 200s2 placed in respective sample provisioning appliances 200p1, 200p2, 200p3, and a camera 210 for obtaining said input images, corresponds to the setup of the sample preplacement area 200 which was used for obtaining the training images for the training system 100.

The line scan module 110 of sample width prediction system 100' provides the same functionality as the line scan module 110 of the training system 100. However, in this embodiment, a plurality of radial line scans (Is1 to Ism) is obtained 2200 from the input image 201i with the sample provisioning appliance 200p1 and the particular sample 200s1. Thereby, each line scan extends at least from the outermost sample interface area 200a1 to the innermost sample interface area 200a3 in the direction of the center c1 of the sample provisioning appliance. Each line scan provides a brightness profile b₁ to bₘ of the input image 210i along the respective line scan. The brightness profiles b₁ to bₘ of the plurality of radial line scans are then concatenated 2300, in a predefined order, into a concatenated brightness profile b_{c} which is provided 2400 as a single brightness vector BV to the trained neural network 120. The line scan correction performed by the optional line scan correction module 110-1 of the training system 100 can also be applied 2160 by the sample width prediction system 100' to compensate for image distortion of the input image 210i caused by a respective viewing angle of the camera in relation to the sample provisioning appliance 200p1.

The trained neural network 120 with the weights V, W, which have been trained in accordance with the herein disclosed training method, uses the brightness vector BV as test input to its input layer 120-i, to obtain 2500 a prediction ps-s1 of the maximum sample width of the particular sample 200s1 as output of the neural network 120. In the case of using a classification neural network, the predicted maximum sample ps-s1 width corresponds to the value associated with the index of the output layer neuron with the highest value. In case of using a regression neural network, the single output layer neuron provides directly the value of the maximum sample width ps-s1 of the sample 200s1 represented in the input image 210i.

In one embodiment, the sample width prediction system 100' further includes a robot instruction composer module 140. Module 140 knows a set of instructions which can control a sample holder selection robot 220 to perform certain handling tasks with regard to the sample s1. Based on the predicted maximum sample width ps-s1, and by using said set of instructions, module 140 can compose 2600 a control instruction Cl1 for the sample holder selection robot 220 which is adapted to instruct said robot 220 to automatically select a particular sample holder 200h3 associated with the predicted maximum sample width ps-s1. The selection is made from a plurality of differently sized sample holders 200h1 to 200h3 which serve as a reservoir of sample holders in the sample placement area for all kinds of differently sized samples. The composed control instruction Cl further includes commands for the robot to place the sample 200s1 in the selected particular sample holder 200h3 such that a physical measurement can be performed for the sample in a respective measurement appliance. The control instruction Cl1 is then provided 2700 to said sample holder selection robot 220 via the data interface of the sample width prediction system 100.

In an alternative approach, the line scan module and the training of the neural network can be adapted to reveal the geometry of a sample in greater detail based on the pixel representation of the sample in an input or training image. This solution is computationally more efficient than training a model for standard object recognition to recognize the sample outline from an entire input or training image. For the above disclosed approach, one-dimensional line scans are sufficient to provide brightness profiles which enable the prediction of the maximum sample width of a respective sample with 100% accuracy. However, to train a model to detect the sample edge based on a one-dimensional line scan has been shown to be difficult. This problem can be overcome by adding some width to each of the radial line scans. In experiments, it was found that when using radial line scans where each line scan has a width of a few pixels (e.g., two to five pixels), and feeding the brightness values of each line scan into a neural network which is trained to output the distance of the sample edge from the center of the radial line scans for each line scan. Unlike the architecture of the example classification neural networks in FIGs. 1A, 1B, the neural network for predicting for a multipixel wide line scan the distance of the sample edge from the center of the radial scans is a regression neural network which involves a single output neuron, whose value indicates the sample edge radius. Since this prediction is a continuous value and not discrete, a regression loss function (e.g., mean squared error) is used. By repeating this sample edge radius prediction for a set of radial line scans, a list of line scan angles and their associated sample edge distance from the center can be used to create, in a post processing step, a polygonal approximation of the sample geometry. Increasing the number of line scans results in finer detail of the sample geometry. From the predicted sample geometry, the maximum sample width can then be determined for samples of arbitrary shapes, and the correct sample holder can be selected by the sample holder selection robot.

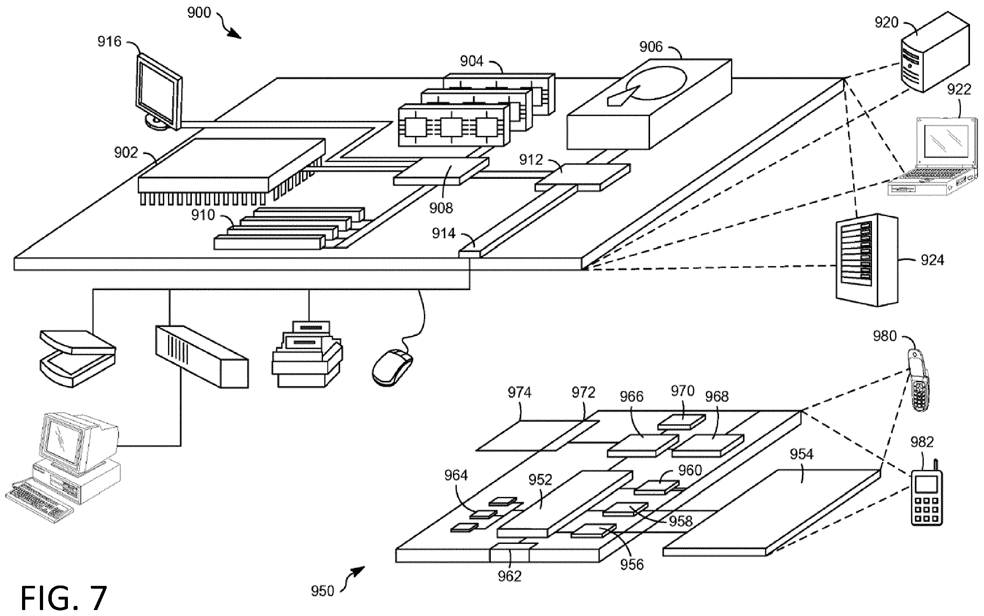

FIG. 7 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Device 900 may have a GPU adapted to process machine learning algorithms. However, the herein disclosed artificial neural network is small enough to be processed by a standard CPU used by the spectrometer. Generic computer device 900 may correspond to any one of the computer systems 100, 100' of FIG. 1A of FIG. 1B, respectively. Computing device 950 is intended to represent various forms of mobile devices, such as personal digital assistants, cellular telephones, smart phones, and other similar computing devices. For example, computing device 950 may be used as a GUI frontend for a user to visualize the maximum sample width for the user. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low-speed interface 912 connecting to low-speed bus 914 and storage device 906. The processor 902, the memory 904, the storage device 906, the high-speed interface 908, the high-speed expansion ports 910 and the low-speed interface 912 are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high-speed interface 908. In other implementations, multiple processing units and/or multiple buses may be used, as appropriate, along with multiple memories and types of memory. The herein disclosed training system 100 and sample width prediction system 100' may also use a Graphics Processing Unit (GPU) or another type of processor, such as for example a Tensor Processing Unit (TPUs), which is adapted for the training and the operation of an artificial neural network like the neural network 120 (cf. FIG. 1A, FIG. 1B). Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed interface 908 manages bandwidth-intensive operations for the computing device 900, while the low-speed interface 912 manages lower bandwidth-intensive operations. Such allocation of functions is exemplary only. In one implementation, the high-speed interface 908 is coupled to memory 904, display 916 (e.g., through a graphics processor or accelerator), and to high-speed expansion ports 910, which may accept various expansion cards (not shown). In the implementation, low-speed interface 912 is coupled to storage device 906 and low-speed expansion bus 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as computing device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The computing device 950 may also be provided with a storage device, such as a microdrive or other device, to provide additional storage. The processor 952, the memory 964, the display 954, the communication interface 966, and the transceiver 968 are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the computing device 950, such as control of user interfaces, applications run by computing device 950, and wireless communication by computing device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of computing device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to computing device 950 through expansion interface 982, which may include, for example, a SIMM (Single In Line Memory Module) card interface. Such expansion memory may provide extra storage space for computing device 950, or may also store applications or other information for computing device 950. Specifically, expansion memory may include instructions to carry out or supplement the processes described above, and may include secure information also. Thus, for example, expansion memory may act as a security module for computing device 950, and may be programmed with instructions that permit secure use of computing device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory, or memory on processor 952, that may be received, for example, over transceiver 968 or external interface 962.

Computing device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through transceiver 968. In addition, short-range communication may occur, such as using a Bluetooth, WiFi, or other such transceiver (not shown). In addition, GPS (Global Positioning System) receiver module may provide additional navigation- and location-related wireless data to computing device 950, which may be used as appropriate by applications running on computing device 950.

Device 950 may also communicate audibly using audio codec 960, which may receive spoken information from a user and convert it to usable digital information. Audio codec 960 may likewise generate audible sound for a user, such as through a speaker, e.g., in a handset of computing device 950. Such sound may include sound from voice telephone calls, may include recorded sound (e.g., voice messages, music files, etc.) and may also include sound generated by applications operating on computing device 950.

The computing device 950 may be implemented in a number of different forms, as shown in the figure. For example, it may be implemented as a cellular telephone 980. It may also be implemented as part of a smart phone, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method (1000) for training an artificial neural network (120) to predict a maximum sample width of a particular sample (200s1) placed in a sample provisioning appliance (200p1), the sample provisioning appliance having a plurality of differently sized sample interface areas (200a1, 200a2, 200a3), wherein each sample interface area is adapted for the receipt of a sample with a maximum sample width that fits into a respective sample interface area, wherein the artificial neural network (120) has an input layer (120-i), an output layer (120-o), and at least one hidden layer (120-h), the output layer (120-o) having one or more neurons representing the predicted maximum sample width of the particular sample (200s1), the method comprising:
Receiving (1100) a plurality of training images (210ti*) arranged in one or more training batches, wherein each training image (210ti1) shows a training sample (200ts1, 200ts2) placed in a corresponding sample provisioning appliance (200p1, 200p2), the training sample having a known maximum sample width covering at least a portion of a corresponding sample interface area (200a3, 200a2), wherein the plurality of training images (210ti*) comprises training images with known maximum sample widths for all differently sized sample interface areas;
For each training image (210ti1 to 210tik):
Obtaining (1200) a plurality of radial line scans (ls1 to lsm) of the training image (201ti1) with the sample provisioning appliance (200p1) and the respective training sample (200ts1), wherein the center point of the radial line scans is associated with the center (c1) of the sample provisioning appliance, and wherein each line scan extends at least from the outermost sample interface area (200a1) to the innermost sample interface area (200a3) providing a brightness profile (b₁ to bₘ) of the training image (210ti1) along the respective line scan;
Concatenating (1300), in a predefined order, the brightness profiles of the plurality of radial line scans into a single brightness vector (b_{c}, BV);
Providing (1400) the brightness vector (BV) as training input to the input layer (120-i) of the neural network, wherein the number of neurons of the input layer equals the number of brightness values in the brightness vector;
For a current training batch, processing (1500), by the neural network, the respective brightness vectors to predict a maximum sample width for each respective training image, and using the known maximum sample widths (ss1) associated with the training samples of the respective training images (210ti1) as ground truth for the output layer (120-o) when training (1600) weights (V, W) and biases of the neural network by using gradient descent to minimize an averaged output of a predefined loss function, the averaged output being the average of the loss of all training images in the current training batch;
Upon detecting (1700) that a predefined prediction accuracy of the neural network has not been reached with the current training batch and/or that the reduction in the average loss from a preceding training batch to the current training batch has not fallen below a predefined threshold, using a next training batch as current training batch, and repeating the processing (1500) and training (1600) steps.

2. The method of claim 1, wherein the particular sample has a point-symmetric cross-section in parallel to a sample interface area matching the maximum sample width of the particular sample.

3. The method of any one of the previous claims, wherein the neural network (120) is implemented as a classification neural network and the output layer comprises a number of neurons corresponding to the number of sample interface areas, wherein each neuron of the output layer represents a different maximum sample width associated with the size of one of the sample interface areas, and wherein training the weights and biases of the classification neural network is based on a classification activation function for the output layer and a classification loss function.

4. The method of claim 1 or 2, wherein the neural network (120) is implemented as a regression neural network and the output layer has a single neuron providing the predicted maximum sample width as a size value corresponding to the size of the sample interface area covered at least partially by the particular sample, and wherein training the weights and biases of the regression neural network is based on a regression activation function and a regression loss function.

5. The method of any of the previous claims, wherein the plurality of training images is enhanced by generating additional training images by using any of the following: varying the center point of the radial line scans of an already existing training image, varying the brightness of an already existing training image, or blurring an already existing training image.

6. The method of any one of the previous claims, wherein the training images (210ti*) are distorted resulting in a squeezed image axis due to a viewing angle (θ) of a camera (210) capturing the training images in cases where the optical axis of the camera is not orthogonal to a respective sample provisioning appliance, and wherein obtaining (1200) the plurality of radial line scans of the training image further comprises:
Applying (1260) a line scan correction for compensating image distortion resulting from said viewing angle (θ) of the camera (210) by using a scaling factor for the radial line scans stretching start and end points of each line scan along an axis (y) orthogonal to the squeezed axis (x) of the distorted training images.

7. A computer program product for training an artificial neural network (120) to predict a maximum sample width of a particular sample (200s1) placed in a sample provisioning appliance (200p1), comprising computer readable instructions that, when loaded into a memory of a computing device (100) and processed by one or more processors of the computing device, cause the computing device to perform the steps of the computer-implemented method according to any of the previous claims.

8. An artificial neural network (120) adapted to predict a maximum sample width of a particular sample (200s1) placed in a sample provisioning appliance (200p1), comprising:
an input layer (120-i), an output layer (120-o), and at least one hidden layer (120-h), wherein:
the output layer (120-o) has one or more neurons representing the maximum sample width of the particular sample (200s1), and
the input layer (120-i) has a number of neurons which equals a number of brightness values of an input brightness vector (BV) obtained from a plurality of radial line scans (ls1 to Ism) of an input image (210i) with the particular sample (200s1) placed in the sample provisioning appliance (200p1), wherein each line scan extends at least from an outermost sample interface area (200a1) to an innermost sample interface area (200a3) of the sample provisioning appliance in the direction of the center (c1) of the sample provisioning appliance, wherein each line scan provides a brightness profile (b1 to bm) of the input image along the respective line scan, wherein the brightness profiles (b1 to bm) of the plurality of radial line scans (ls1 to Ism) are concatenated into said brightness vector (BV);
wherein weights (V, W) and biases of the neural network (120) have been obtained by training the neural network in accordance with the computer-implemented method (1000) according to any of the claims 1 to 6.

9. A computer-implemented method (2000) for predicting a maximum sample width using an artificial neural network (120) according to claim 7, comprising:
Receiving (2100) an input image (210i) showing a particular sample provisioning appliance (200p1) and a respective sample (200s1) covering at least a portion of one particular sample interface area (200a3) of the particular sample provisioning appliance;
Obtaining (2200) a plurality of radial line scans (Is1 to Ism) of the input image (210i), wherein each line scan extends at least from an outermost sample interface area (200a1) to an innermost sample interface area (200a3) in the direction of the center (c1) of the sample provisioning appliance (200p1), wherein each line scan provides a brightness profile (b1 to bm) of the input image along the respective line scan;
Concatenating (2300) the brightness profiles (b1 to bm) of the plurality of radial line scans into a single brightness vector (BV);
Providing (2400) the brightness vector (BV) as test input to the input layer (120-i) of the neural network (120), wherein the number of neurons of the input layer equals the number of brightness values in the brightness vector; and
Obtaining (2500) a prediction (ps-s1) of the maximum sample width of the particular sample (200s1) from the output layer (120-o) of the neural network (120).

10. The method of claim 9, further comprising:
Based on the predicted maximum sample width (ps-s1), composing (2600) a control instruction (Cl1) for a sample holder selection robot (220),
wherein the control instruction (Cl1) is adapted to instruct said robot (220) to automatically select, from a plurality of differently sized sample holders (200h1 to 200h3), a particular sample holder (200h3) associated with the predicted maximum sample width (ps-s1), and to place the respective sample (200s1) in the selected particular sample holder (200h3) such that a physical measurement can be performed for the respective sample in a respective measurement appliance; and
providing (2700) the control instruction (Cl1) to said sample holder selection robot (220).

11. A computer program product for predicting a maximum sample width of a particular sample (200s1) placed in a sample provisioning appliance (200p1), comprising computer readable instructions that, when loaded into a memory of a computing device (100') and processed by one or more processors of the computing device, cause the computing device to perform the steps of the computer-implemented method according to any of the claims 9 to 10.

12. A computer system (100) adapted for training an artificial neural network (120) to predict a maximum sample width of a particular sample (200s1) placed in a sample provisioning appliance (200p1), the sample provisioning appliance having a plurality of differently sized sample interface areas (200a1, 200a2, 200a3), wherein each sample interface area is adapted for the receipt of a sample with a maximum sample width that fits into a respective sample interface area, wherein the artificial neural network (120) has an input layer (120-i), an output layer (120-o), and at least one hidden layer (120-h), the output layer (120-o) having one or more neurons representing the predicted maximum sample width of the particular sample (200s1), the system comprising:
A data interface adapted to receive a plurality of training images (210ti*) arranged in one or more training batches, wherein each training image (210ti1) shows a training sample (200ts1, 200ts2) placed in a corresponding sample provisioning appliance (200p1, 200p2), the training sample having a known maximum sample width (ss1) covering at least a portion of a corresponding sample interface area (200a3, 200a2), wherein the plurality of training images (210ti*) comprises training images with known maximum sample widths for all differently sized sample interface areas;
A training module (190) adapted to train the neural network with the received training images (210ti1 to 210tik), using:
A line scan module (110) adapted to obtain a plurality of radial line scans (Is1 to Ism) of the training images (201ti1) with respective sample provisioning appliances (200p1) and respective training samples (200ts1), wherein the center point for each radial line scan is associated with the center (c1) of the respective sample provisioning appliance, and wherein each line scan extends at least from the outermost sample interface area (200a1) to the innermost sample interface area (200a3) providing a brightness profile (b₁ to bₘ) of the respective training image (210ti1) along the respective line scan, and further adapted to concatenate, in a predefined order, the brightness profiles (b₁ to bₘ) of the plurality of radial line scans of each respective training image into a single brightness vector (b_{c}, BV);
The neural network (120) using the brightness vectors (BV) of a current training batch as training input to the input layer (120-i), wherein the number of neurons of the input layer equals the number of brightness values in the brightness vector, and using the known maximum sample width (ss1) associated with the training sample of the training image (210ti1) as ground truth for the output layer (120-o) when training weights (V, W) and biases of the neural network by using gradient descent to minimize the output of a loss function (LF) used for determining said loss, wherein the output of the loss function is the average loss for the current training batch; and
An accuracy check module (130) adapted to detect that a predefined prediction accuracy of the neural network has not been reached with the current training batch and/or the reduction in the average loss from a preceding training batch to the current training batch has not fallen below a predefined threshold, and, in case of detection, to trigger the neural network to continue training with a next training batch.

13. The system of claim 12, wherein the neural network (120) is implemented as a classification neural network and the output layer comprises a number of neurons corresponding to the number of sample interface areas, wherein each neuron of the output layer represents a different maximum sample width associated with the size of one of the sample interface areas, and wherein training the weights and biases of the classification neural network is based on a classification activation function for the output layer and a classification loss function.

14. The system of claim 12, wherein the neural network (120) is implemented as a regression neural network and the output layer has a single neuron providing the predicted maximum sample width as a size value corresponding to the size of the sample interface area covered at least partially by the particular sample, and wherein training the weights and biases of the regression neural network is based on a regression activation function and a regression loss function.

15. The system of any of the claims 12 to 14, further comprising a correction module (110-1) adapted to apply a line scan correction for compensating image distortion resulting in a squeezed image axis due to a viewing angle (θ) of a camera (210) capturing the training images, in cases where the camera is not situated directly above the center of a respective sample provisioning appliance, by using a scaling factor for the radial line scans stretching start and end points of each line scan along an axis (y) orthogonal to the squeezed axis (x) of the distorted training images.

16. A computer system (100') adapted to predict a maximum sample width of a particular sample (200s1) placed in a sample provisioning appliance (200p1), comprising:
A data interface adapted to receive an input image (210i) showing a particular sample provisioning appliance (200p1) and a respective sample (200s1) covering at least a portion of one particular sample interface area (200a3) of the particular sample provisioning appliance;
A line scan module (110) adapted to obtain a plurality of radial line scans (Is1 to Ism) of the input image (201i) with the sample provisioning appliance (200p1) and the particular sample (200s1), wherein each line scan extends at least from the outermost sample interface area (200a1) to the innermost sample interface area (200a3) in the direction of the center (c1) of the sample provisioning appliance,
wherein each line scan provides a brightness profile (b₁ to bₘ) of the input image (210i) along the respective line scan, and further adapted to concatenate, in a predefined order, the brightness profiles (b₁ to bₘ) of the plurality of radial line scans into a single brightness vector (b_{c}, BV); and
A trained neural network (120) in accordance with claim 8, adapted to use the brightness vector (BV) as test input to its input layer (120-i), to obtain a prediction (ps-s1) of the maximum sample width of the particular sample (200s1) as output of the neural network (120).

17. The computer system of claim 16, further comprising:
A robot instruction composer module (140) adapted to compose, based on the predicted maximum sample width (ps-s1), a control instruction (Cl1) for a sample holder selection robot (220), wherein the control instruction (Cl1) is adapted to instruct said robot (220) to automatically select, from a plurality of differently sized sample holders (200h1 to 200h3), a particular sample holder (200h3) associated with the predicted maximum sample width (ps-s1), and to place the respective sample (200s1) in the selected particular sample holder (200h3) such that a physical measurement can be performed for the respective sample in a respective measurement appliance; and
Wherein the data interface is further adapted to provide the control instruction (Cl1) to said sample holder selection robot (220).

## Amended claims

### Amended claims in accordance with Rule 137(2) EPC.

1. A computer-implemented method (1000) for training an artificial neural network (120) to predict a maximum sample width of a particular sample (200s1) placed in a sample provisioning appliance (200p1), the sample provisioning appliance having a plurality of differently sized sample interface areas (200a1, 200a2, 200a3), wherein each sample interface area is adapted for the receipt of a sample with a maximum sample width that fits into a respective sample interface area, wherein the artificial neural network (120) has an input layer (120-i), an output layer (120-o), and at least one hidden layer (120-h), the output layer (120-o) having one or more neurons representing the predicted maximum sample width of the particular sample (200s1), the method comprising:
Receiving (1100) a plurality of training images (210ti*) arranged in one or more training batches, wherein each training image (210ti1) shows a training sample (200ts1, 200ts2) placed in a corresponding sample provisioning appliance (200p1, 200p2), the training sample having a known maximum sample width covering at least a portion of a corresponding sample interface area (200a3, 200a2), wherein the plurality of training images (210ti*) comprises training images with known maximum sample widths for all differently sized sample interface areas;
For each training image (210ti1 to 210tik):
Obtaining (1200) a plurality of radial line scans (Is1 to Ism) of the training image (201ti1) with the sample provisioning appliance (200p1) and the respective training sample (200ts1), wherein the center point of the radial line scans is associated with the center (c1) of the sample provisioning appliance, and wherein each line scan extends at least from the outermost sample interface area (200a1) to the innermost sample interface area (200a3) providing a brightness profile (b₁ to bₘ) of the training image (210ti1) along the respective line scan;
Concatenating (1300), in a predefined order, the brightness profiles of the plurality of radial line scans into a single brightness vector (b_{c}, BV);
Providing (1400) the brightness vector (BV) as training input to the input layer (120-i) of the neural network, wherein the number of neurons of the input layer equals the number of brightness values in the brightness vector;
For a current training batch, processing (1500), by the neural network, the respective brightness vectors to predict a maximum sample width for each respective training image, and using the known maximum sample widths (ss1) associated with the training samples of the respective training images (210ti1) as ground truth for the output layer (120-o) when training (1600) weights (V, W) and biases of the neural network by using gradient descent to minimize an averaged output of a predefined loss function, the averaged output being the average of the loss of all training images in the current training batch;
Upon detecting (1700) that a predefined prediction accuracy of the neural network has not been reached with the current training batch and/or that the reduction in the average loss from a preceding training batch to the current training batch has not fallen below a predefined threshold, using a next training batch as current training batch, and repeating the processing (1500) and training (1600) steps.

2. The method of claim 1, wherein the particular sample has a point-symmetric cross-section in parallel to a sample interface area matching the maximum sample width of the particular sample.

3. The method of any one of the previous claims, wherein the neural network (120) is implemented as a classification neural network and the output layer comprises a number of neurons corresponding to the number of sample interface areas, wherein each neuron of the output layer represents a different maximum sample width associated with the size of one of the sample interface areas, and wherein training the weights and biases of the classification neural network is based on a classification activation function for the output layer and a classification loss function.

4. The method of claim 1 or 2, wherein the neural network (120) is implemented as a regression neural network and the output layer has a single neuron providing the predicted maximum sample width as a size value corresponding to the size of the sample interface area covered at least partially by the particular sample, and wherein training the weights and biases of the regression neural network is based on a regression activation function and a regression loss function.

5. The method of any of the previous claims, wherein the plurality of training images is enhanced by generating additional training images by using any of the following: varying the center point of the radial line scans of an already existing training image, varying the brightness of an already existing training image, or blurring an already existing training image.

6. The method of any one of the previous claims, wherein the training images (210ti*) are distorted resulting in a squeezed image axis due to a viewing angle (θ) of a camera (210) capturing the training images in cases where the optical axis of the camera is not orthogonal to a respective sample provisioning appliance, and wherein obtaining (1200) the plurality of radial line scans of the training image further comprises:
Applying (1260) a line scan correction for compensating image distortion resulting from said viewing angle (θ) of the camera (210) by using a scaling factor for the radial line scans stretching start and end points of each line scan along an axis (y) orthogonal to the squeezed axis (x) of the distorted training images.

7. A computer program product for training an artificial neural network (120) to predict a maximum sample width of a particular sample (200s1) placed in a sample provisioning appliance (200p1), comprising computer readable instructions that, when loaded into a memory of a computing device (100) and processed by one or more processors of the computing device, cause the computing device to perform the steps of the computer-implemented method according to any of the previous claims.

8. An artificial neural network (120) adapted to predict a maximum sample width of a particular sample (200s1) placed in a sample provisioning appliance (200p1), comprising:
an input layer (120-i), an output layer (120-o), and at least one hidden layer (120-h), wherein:
the output layer (120-o) has one or more neurons representing the maximum sample width of the particular sample (200s1), and
the input layer (120-i) has a number of neurons which equals a number of brightness values of an input brightness vector (BV) obtained from a plurality of radial line scans (Is1 to Ism) of an input image (210i) with the particular sample (200s1) placed in the sample provisioning appliance (200p1), wherein
each line scan extends at least from an outermost sample interface area (200a1) to an innermost sample interface area (200a3) of the sample provisioning appliance in the direction of the center (c1) of the sample provisioning appliance, wherein each line scan provides a brightness profile (b1 to bm) of the input image along the respective line scan, wherein the brightness profiles (b1 to bm) of the plurality of radial line scans (Is1 to Ism) are concatenated into said brightness vector (BV);
wherein weights (V, W) and biases of the neural network (120) have been obtained by training the neural network in accordance with the computer-implemented method (1000) according to any of the claims 1 to 6.

9. A computer-implemented method (2000) for predicting a maximum sample width using an artificial neural network (120) according to claim 8, comprising:
Receiving (2100) an input image (210i) showing a particular sample provisioning appliance (200p1) and a respective sample (200s1) covering at least a portion of one particular sample interface area (200a3) of the particular sample provisioning appliance;
Obtaining (2200) a plurality of radial line scans (Is1 to Ism) of the input image (210i), wherein each line scan extends at least from an outermost sample interface area (200a1) to an innermost sample interface area (200a3) in the direction of the center (c1) of the sample provisioning appliance (200p1), wherein each line scan provides a brightness profile (b1 to bm) of the input image along the respective line scan;
Concatenating (2300) the brightness profiles (b1 to bm) of the plurality of radial line scans into a single brightness vector (BV);
Providing (2400) the brightness vector (BV) as test input to the input layer (120-i) of the neural network (120), wherein the number of neurons of the input layer equals the number of brightness values in the brightness vector; and
Obtaining (2500) a prediction (ps-s1) of the maximum sample width of the particular sample (200s1) from the output layer (120-o) of the neural network (120).

10. The method of claim 9, further comprising:
Based on the predicted maximum sample width (ps-s1), composing (2600) a control instruction (CI1) for a sample holder selection robot (220),
wherein the control instruction (CI1) is adapted to instruct said robot (220) to automatically select, from a plurality of differently sized sample holders (200h1 to 200h3), a particular sample holder (200h3) associated with the predicted maximum sample width (ps-s1), and to place the respective sample (200s1) in the selected particular sample holder (200h3) such that a physical measurement can be performed for the respective sample in a respective measurement appliance; and
providing (2700) the control instruction (CI1) to said sample holder selection robot (220).

11. A computer program product for predicting a maximum sample width of a particular sample (200s1) placed in a sample provisioning appliance (200p1), comprising computer readable instructions that, when loaded into a memory of a computing device (100') and processed by one or more processors of the computing device, cause the computing device to perform the steps of the computer-implemented method according to any of the claims 9 to 10.

12. A computer system (100) adapted for training an artificial neural network (120) to predict a maximum sample width of a particular sample (200s1) placed in a sample provisioning appliance (200p1), the sample provisioning appliance having a plurality of differently sized sample interface areas (200a1, 200a2, 200a3), wherein each sample interface area is adapted for the receipt of a sample with a maximum sample width that fits into a respective sample interface area, wherein the artificial neural network (120) has an input layer (120-i), an output layer (120-o), and at least one hidden layer (120-h), the output layer (120-o) having one or more neurons representing the predicted maximum sample width of the particular sample (200s1), the system comprising:
A data interface adapted to receive a plurality of training images (210ti*) arranged in one or more training batches, wherein each training image (210ti1) shows a training sample (200ts1, 200ts2) placed in a corresponding sample provisioning appliance (200p1, 200p2), the training sample having a known maximum sample width (ss1) covering at least a portion of a corresponding sample interface area (200a3, 200a2), wherein the plurality of training images (210ti*) comprises training images with known maximum sample widths for all differently sized sample interface areas;
A training module (190) adapted to train the neural network with the received training images (210ti1 to 210tik), using:
A line scan module (110) adapted to obtain a plurality of radial line scans (Is1 to Ism) of the training images (201ti1) with respective sample provisioning appliances (200p1) and respective training samples (200ts1), wherein the center point for each radial line scan is associated with the center (c1) of the respective sample provisioning appliance, and wherein each line scan extends at least from the outermost sample interface area (200a1) to the innermost sample interface area (200a3) providing a brightness profile (b₁ to bₘ) of the respective training image (210ti1) along the respective line scan, and further adapted to concatenate, in a predefined order, the brightness profiles (b₁ to bₘ) of the plurality of radial line scans of each respective training image into a single brightness vector (b_{c}, BV);
The neural network (120) using the brightness vectors (BV) of a current training batch as training input to the input layer (120-i), wherein the number of neurons of the input layer equals the number of brightness values in the brightness vector, and using the known maximum sample width (ss1) associated with the training sample of the training image (210ti1) as ground truth for the output layer (120-o) when training weights (V, W) and biases of the neural network by using gradient descent to minimize the output of a loss function (LF) used for determining said loss, wherein the output of the loss function is the average loss for the current training batch; and
An accuracy check module (130) adapted to detect that a predefined prediction accuracy of the neural network has not been reached with the current training batch and/or the reduction in the average loss from a preceding training batch to the current training batch has not fallen below a predefined threshold, and, in case of detection, to trigger the neural network to continue training with a next training batch.

13. The system of claim 12, wherein the neural network (120) is implemented as a classification neural network and the output layer comprises a number of neurons corresponding to the number of sample interface areas, wherein each neuron of the output layer represents a different maximum sample width associated with the size of one of the sample interface areas, and wherein training the weights and biases of the classification neural network is based on a classification activation function for the output layer and a classification loss function.

14. The system of claim 12, wherein the neural network (120) is implemented as a regression neural network and the output layer has a single neuron providing the predicted maximum sample width as a size value corresponding to the size of the sample interface area covered at least partially by the particular sample, and wherein training the weights and biases of the regression neural network is based on a regression activation function and a regression loss function.

15. The system of any of the claims 12 to 14, further comprising a correction module (110-1) adapted to apply a line scan correction for compensating image distortion resulting in a squeezed image axis due to a viewing angle (θ) of a camera (210) capturing the training images, in cases where the camera is not situated directly above the center of a respective sample provisioning appliance, by using a scaling factor for the radial line scans stretching start and end points of each line scan along an axis (y) orthogonal to the squeezed axis (x) of the distorted training images.

16. A computer system (100') adapted to predict a maximum sample width of a particular sample (200s1) placed in a sample provisioning appliance (200p1), comprising:
A data interface adapted to receive an input image (210i) showing a particular sample provisioning appliance (200p1) and a respective sample (200s1) covering at least a portion of one particular sample interface area (200a3) of the particular sample provisioning appliance;
A line scan module (110) adapted to obtain a plurality of radial line scans (Is1 to Ism) of the input image (201i) with the sample provisioning appliance (200p1) and the particular sample (200s1), wherein each line scan extends at least from the outermost sample interface area (200a1) to the innermost sample interface area (200a3) in the direction of the center (c1) of the sample provisioning appliance, wherein each line scan provides a brightness profile (b₁ to bₘ) of the input image (210i) along the respective line scan, and further adapted to concatenate, in a predefined order, the brightness profiles (b₁ to bₘ) of the plurality of radial line scans into a single brightness vector (b_{c}, BV); and
A trained neural network (120) in accordance with claim 8, adapted to use the brightness vector (BV) as test input to its input layer (120-i), to obtain a prediction (ps-s1) of the maximum sample width of the particular sample (200s1) as output of the neural network (120).

17. The computer system of claim 16, further comprising:
A robot instruction composer module (140) adapted to compose, based on the predicted maximum sample width (ps-s1), a control instruction (CI1) for a sample holder selection robot (220), wherein the control instruction (CI1) is adapted to instruct said robot (220) to automatically select, from a plurality of differently sized sample holders (200h1 to 200h3), a particular sample holder (200h3) associated with the predicted maximum sample width (ps-s1), and to place the respective sample (200s1) in the selected particular sample holder (200h3) such that a physical measurement can be performed for the respective sample in a respective measurement appliance; and
Wherein the data interface is further adapted to provide the control instruction (CI1) to said sample holder selection robot (220).
